# EUROPÄISCHE PATENTSCHRIFT

(11) **EP 1 528 623 B1**
(45) Veröffentlichungstag und Bekanntmachung des Hinweises auf die Patenterteilung: **07.03.2007**
(21) Anmeldenummer: 05002708.5
(22) Anmeldetag: 06.05.2002
(51) Int. Cl.: H01Q 1/24, H01Q 7/00, H01Q 7/04, H04B 17/00, H04B 1/38, H01Q 21/28, H01Q 21/30

(54) **Antennenkoppler**
Antenna coupler
Coupleur d' antenne

(30) Priorität: 19.06.2001 DE 10129408
(43) Veröffentlichungstag der Anmeldung: 04.05.2005
(62) Teilanmeldung aus: 02732701.4
(73) Patentinhaber: Rohde & Schwarz GmbH & Co. KG, 81671 München (DE)
(72) Erfinder: Holzmann, Gottfried, 85604 Zorneding (DE); Roth, Martin, 82319 Starnberg (DE)
(74) Vertreter: Körfer, Thomas

(56) Entgegenhaltungen:
- DE-C- 912 583
- DE-C- 19 732 639
- GB-A- 744 116
- US-A- 4 433 336
- US-A- 5 508 710
- US-A- 5 777 585
- US-A- 5 852 421

## Beschreibung

Die Erfindung betrifft einen Antennenkoppler zum Testen von Sendern und/oder Empfängern, insbesondere von Mobiltelefonen oder Geräten, die nach dem Blue-Tooth-Standard arbeiten.

Aus der DE 197 32 639 C1 ist ein Antennenkoppler zum Testen von Mobiltelefonen bekannt. Bei dem bekannten Antennenkoppler ist ein Aufnahmeelement für ein Mobiltelefon auf einer Leiterplatte befestigt. Auf der Leiterplatte ist in Streifenleitertechnik eine Stabantenne ausgebildet, die insbesondere als Dipol-Antenne wirkt. Eine wesentliche Eigenschaft des Antennenkopplers ist der Kopplungsfaktor, welcher das Verhältnis der empfangenen Leistung in Bezug auf die abgestrahlte Gesamtleistung angibt. Da die bekannte Anordnung äußerst sensibel auf Lageänderungen der Antenne des Mobiltelefons reagiert, ist der Kopplungsfaktor für jeden an dem Aufnahmeelement fixierte Typ von Mobiltelefon unterschiedlich.

Die US 5,777,585 geht aus von einem Antennenkoppler, einem ersten externen Antennenanschluss und einem zweiten externen Antennenanschluss auf einer leitenden Platte, der eine unnötige Abstrahlung von Leistung unterdrückt. Der Antennenkoppler verringert die Verlustleistung bei der Übertragung und weist eine lange Lebensdauer und eine gute Bedienbarkeit auf. Er umfasst ein elektromagnetisches Koppelelement, das aus einem Leiter besteht, der nicht mit einer ersten Antenne im Hinblick auf Gleichstromanteile in Kontakt steht. Ferner kontaktiert das Koppelelement einen Erdleiter im Hinblick auf Gleichstromanteile, wobei die von der ersten Antenne übertragene bzw. die empfangene Leistung zu dem elektromagnetischen Koppelelement hin übertragen wird. Der erste und der zweite externe Antennenanschluss umfassen eine elektrische Schaltung in ihren Gehäusen, welche die Antenne eines tragbaren Funkendgeräts mit einer externen Antenne elektromagnetisch koppelt. Dabei sind die externen Antennenanschlüsse nicht in Kontakt im Hinblick auf Gleichstromanteile mit dem tragbaren Funkendgerät, wenn dieses fixiert ist. Die US 5,777,585 offenbart einen Antennenkoppler gemäß dem Oberbegriff des unabhängigen Anspruchs 1.

Aufgabe der Erfindung ist es daher, einen Antennenkoppler zu schaffen, der gegenüber Lageänderungen der Antenne des Senders und/oder Empfängers unabhängig ist und der sich aufgrund eines einheitlichen Kopplungsfaktors zum Testen von verschiedensten Sender und/oder Empfängern eignet.

Die Aufgabe wird durch einen Antennenkoppler mit den Merkmalen des Anspruchs 1 gelöst. Vorteilhafte Weiterbildungen der Erfindung sind in den Unteransprüchen angegeben.

Erfindungsgemäß ist das Antennenelement als räumlich im wesentlichen geschlossene Schleife ausgebildet. Dadurch wird neben der elektrischen Komponente des von dem Mobiltelefon abgestrahlten Feldes auch die magnetische Komponente erfaßt. Umgekehrt wird auch die Übertragung zu dem Mobiltelefon verbessert. Der Begriff Mobiltelefon wird hier und im Folgenden als ein möglicher Anwendungsfall behandelt. Anstelle des Mobiltelefons eignet sich die Erfindung auch für beliebige andere Sender und/oder Empfänger, z. B. solche, die nach dem Blue-Tooth-Prinzip arbeiten. Dadurch ist der Kopplungsfaktor des erfindungsgemäßen Antennenkopplers weitgehend unabhängig von der genauen Positionierung des Mobiltelefons relativ zu dem Antennenelement. Daher kann auch ein Mobiltelefon getestet werden, bei dem zumindest von außen die genaue Position der Antenne nicht bekannt ist, ohne daß besondere Anpassungen hinsichtlich der räumlichen Orientierung und Lage erforderlich sind.

Vorteilhaft ist es, daß die Schleife im wesentlichen in einer Ebene angeordnet ist, die parallel zu einer Reflektorplatte orientiert ist. Dadurch wird das Vor-/Rückwärtsverhältnis des Antennenkopplers entscheidend verbessert.

Vorteilhaft ist es ferner, daß ein weiteres als räumlich im wesentlichen geschlossen schleife ausgebildetes Antennenelement vorgesehen ist, das so ausgebildet ist, daß der Einspeispunkt des weiteren Antennenelement gegenüber dem Einspeispunkt des einen Antennenelements zumindest im wesentlichen um 90° versetzt angeordnet ist. Dadurch kann der Antennenkoppler über die eine Antenne empfangen und gleichzeitig über die andere Antenne senden, wobei eine maximale Phasenentkopplung erreicht wird, um gegenseitige Beeinflussungen zu vermeiden.

Die Erfindung wird nachfolgend unter Bezugnahme auf die Zeichnung näher erläutert. In der Zeichnung zeigt:
- Fig. 1: ein erstes Beispiel zum besseren Verständnis eines Antennenkopplers in einer Draufsicht;
- Fig. 2: einen Schnitt entlang der in Fig. 1 mit II bezeichneten Schnittlinie;
- Fig. 3: eine schematische Ansicht des Antennenelements zusammen mit einer Meßanordnung gemäß dem ersten Beispiel zum besseren Verständnis eines Autennenkopplers
- Fig. 4: eine schematische Ansicht zweier Antennenelemente gemäß eines ersten Ausführungsbeispiels;
- Fig. 5: eine schematische Darstellung zweier Antennenelemente gemäß eines zweiten Ausführungsbeispiels der Erfindung; und
- Fig. 6: den Aufbau einer Frequenzweiche, die zwischen zwei Antennenelementen und eine Meßanordnung gemäß des zweiten Ausführungsbeispiels der Erfindung geschaltet sein kann.

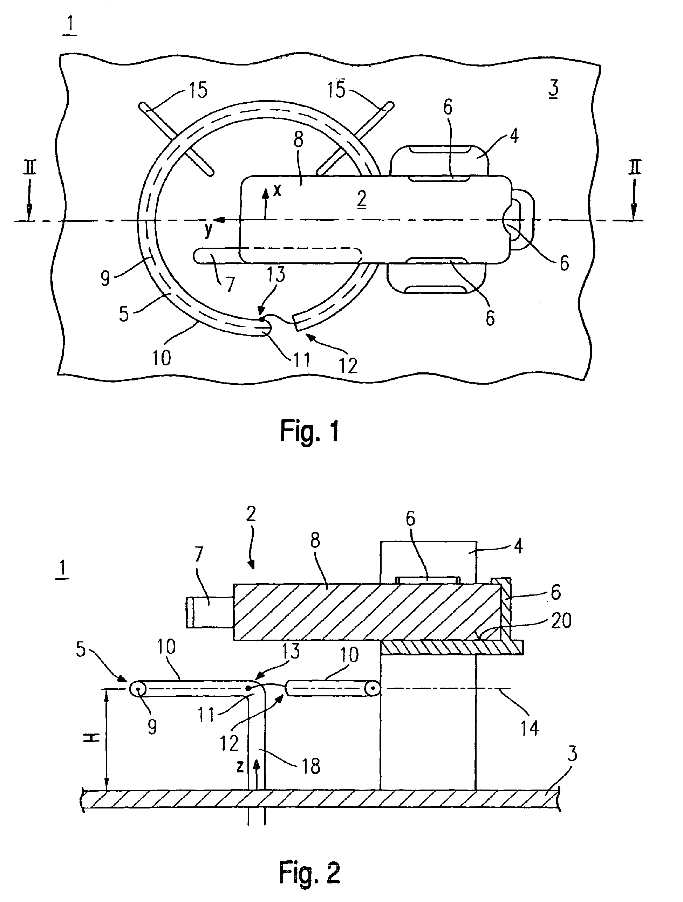

Fig. 1 zeigt einen Antennenkoppler 1 nach einem ersten Beispiel zum besseren Verständnis der Erfindung in einer Draufsicht. Der Antennenkoppler 1 dient zum Testen von einem Mobiltelefon 2. Hierzu wird das Mobiltelefon 2 mittels eines auf einer Reflektorplatte 3 befestigten Aufnahmeelements 4 des Antennenkopplers über einem Antennenelement 5 positioniert. Durch das Aufnahmeelement 4 wird dabei eine definierte Position vorgegeben und eine Verschiebung des Mobiltelefons 2 während der durchgeführten Messungen verhindert. Zur sicheren Befestigung des Mobiltelefons 2 umfaßt das Aufnahmeelement 4 hierzu insbesondere mehrere Arretierelemente 6.

Die Antenne 7 des Mobiltelefons 2, die im Inneren des Mobiltelefons 2 als unterbrochene Linie dargestellt ist, ist durch die Befestigung oberhalb des Antennenelements 5 angeordnet. Da die genaue Position der Antenne 7 von außen nicht ohne weiteres beurteilt werden kann, ist auch eine exakt zentrierte Anordnung der Antenne 7 über dem Antennenelement 5 nur schwer, d. h. nur mittels eines aufwendigen Abgleichs, möglich. Erschwert wird die Situation, wenn Mobiltelefone 2 verwendet werden, bei denen die Antenne 7 vollständig innerhalb des Gehäuses 8 des Mobiltelefons 2 untergebracht ist. Außerdem ist es umständlich, wenn für verschiedene Mobiltelefone 2 eine präzise räumlich Justage durchgeführt werden muß zumal dann das Aufnahmeelement 4 verschiebbar sein müßte. Die vorliegende Erfindung vermeidet die genannten Probleme, indem der Kopplungsfaktor zwischen dem Antennenelement 5 und der Antenne 7 weitgehend unabhängig von der genauen geometrischen Anordnung der Antenne 7 des Mobiltelefons 2 relativ zu dem Antennenelement 5 ist.

Das Antennenelement 5 weist einen in der Fig. 1 unterbrochen dargestellten Innenleiter 9 und einen den Innenleiter 5 umgebenden Außenleiter 10 auf, wobei der Außenleiter 10 den Innenleiter 9 abschirmt. Zwischen den beiden Leitern 9, 10 kann ein Dielektrikum vorgesehen sein. Vorzugsweise umschließt der Außenleiter 10 den Innenleiter 9 umfänglich in Form einer zylindermantelförmigen Abschirmung. Das Antennenelement 5 ist als räumlich im wesentlichen geschlossene Schleife ausgebildet, wobei zwischen dem einen Einspeisepunkt 11 und dem einen Ende 12 des Antennenelements 5 ein möglichst geringer Abstand besteht. An dem Ende 12 des Antennenelements 5 ist der Innenleiter 9 aus dem Außenleiter 10 herausgeführt. Der herausgeführte Innenleiter 9 wird im Bereich 13 des Einspeisepunktes 11 auf den Außenleiter 10 geführt, um einen elektrischen Kontakt zwischen den beiden herzustellen. Der Bereich 13 befindet sich vorzugsweise in der Nähe des Einspeisepunkts 11.

Das Antennenelement 5 ist in einer Ebenen 14 angeordnet, die in der Fig. 2 dargestellt ist. Hierzu werden z. B. aus Teflon bestehende Halter 15 verwendet, die das Antennenelement 5 gegenüber dem Einspeispunkt 11 halten.

Da das als geschlossene Schleife ausgebildete Antennenelement 5 sowohl die in y-Richtung orientierte elektrische Komponente als auch die senkrecht zur Ebene 14 orientierte magnetische Komponente des von der Antenne 7 abgestrahlten elektrischen Feldes mißt, besteht eine weitgehende Unabhängigkeit in x- und y-Richtung bei der Positionierung des Mobiltelefons 2 bzw. der Antenne 7 des Mobiltelefons 2. Dies gilt entsprechend auch für Übertragung von dem Antennenelement 5 zur Antenne 7 des Mobiltelefons 2.

Der Umfang des in der Fig. 1 kreisringförmig angeordneten Antennenelements 5 entspricht im wesentlichen der mittleren Wellenlänge λ, die von dem Antennenelement 5 abgestrahlt bzw. empfangen wird, um eine vorteilhafte Abstrahl- und Empfangscharakteristik zu erreichen. Durch die Montage des Antennenelements 5 über der als Reflektor ausgebildeten Reflektorplatte 3 ergibt sich außerdem ein ausgezeichnetes Vor-/Rückwärtsverhältnis. Die Anordnung besteht aus insgesamt vier Dipolen, wobei die halbe Schleife an dem Einspeisepunkt einen ersten λ/2-Dipol und die halbe Schleife gegenüber dem Einspeisepunkt einen zweiten λ/2-Dipol darstellt und zwei weitere λ/2-Dipole durch die Reflektorplatte 3 virtuell gespiegelt werden.

Dem in der Fig. 2 dargestellten Schnitt entlang der in Fig. 1 mit II bezeichneten Schnittlinie kann außerdem die Höhe H, in der das Antennenelement 5 über der Reflektorplatte 3 angeordnet ist, entnommen werden. Dabei ist die Höhe H gleich einem Achtel der Wellenlänge λ, auf die das Antennenelement 5 abgestimmt ist. Für eine Mittenfrequenz von 2,45 GHz ergibt sich somit eine abgewickelte Länge des Antennenelements 5 von ca. 12 cm und eine Höhe H von ca. 1,5 cm.

Durch das erreicht homogene Feldverhalten in z-Richtung ist somit auch eine z. B. baulich bedingte Höhenvariation der Antenne 7 für den erzielten Kopplungsfaktor weitgehendst ohne Einfluß.

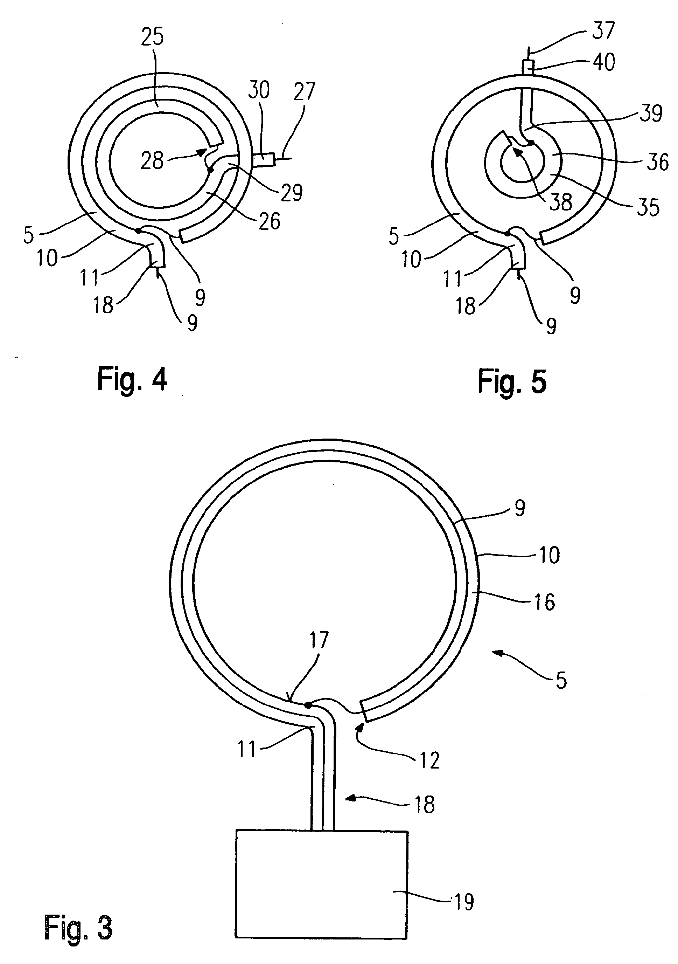

Fig. 3 zeigt einen Antennenkoppler zusammen mit einer Meßanordnung in einer Prinzipdarstellung gemäß dem ersten Beispiel. Das zu einer im wesentlichen geschlossenen kreisringförmigen Schleife gebogene Antennenelement 5 weist den Außenleiter 10 und den Innenleiter 9 auf, zwischen denen ein Dielektrikum 16 vorgesehen ist. Am Ende 12 des Antennenelements 5 ist der Innenleiter 9 auf den dem Einspeisepunkt 11 am nächsten liegenden Abschnitt 17 des Außenleiters 10 geführt, um einen elektrischen Kontakt zwischen diesen herzustellen. Über das Verbindungsstück 18 wird das Antennenelement 5 mit einem Meßgerät 19 verbunden, wobei das Verbindungsstück 18, wie in der Fig. 2 gezeigt, das Antennenelement 5 im Bereich des Einspeisepunktes 11 gegenüber der Reflektorplatte 3 abstützt.

Fig. 4 zeigt den prinzipiellen Aufbau eines ersten Ausführungsbeispiels der Erfindung. Übereinstimmende Elemente sind in dieser und in allen anderen Figuren mit übereinstimmenden Bezugszeichen gekennzeichnet, wodurch sich eine wiederholende Beschreibung erübrigt.

Gemäß dem ersten Ausführungsbeispiel ist ein erstes Antennenelement 5 vorgesehen, daß dem Antennenelement 5 des ersten Beispiels entspricht. Außerdem ist ein zweites Antennenelement 25 vorgesehen, das prinzipiell den gleichen Aufbau wie das erste Antennenelement 5 hat. Das zweite Antennenelement 25 weist daher einen Außenleiter 26, einen Innenleiter 27 und ein offenes Ende 28 auf. Entsprechend dem Antennenelement 5 ist der Innenleiter 27 im Bereich des Einspeisepunktes 29 des Antennenelements 25 auf den Außenleiter 26 zum Herstellen eines elektrischen Kontaktes geführt. Außerdem ist auch ein Verbindungsstück 30 vorgesehen, das das Antennenelement 25 zusammen mit zwei nicht dargestellten Haltern, die den Haltern 15 entsprechen, über einer gemeinsamen Reflektorplatte 3 abstützen.

Bei dem ersten Ausführungsbeispiel der Erfindung soll das Antennenelement 25 abgesehen von der Polarisation in etwa die gleiche Abstrahlcharakteristik wie das Antennenelement 5 aufweisen. Aus Platzgründen ist das Antennenelement 25 allerdings innerhalb des Antennenelements 5 angeordnet, so daß dessen abgewickelte Länge kürzer als die des Antennenelements 5 ist. Um dennoch eine gute Abstrahlcharakteristik der beiden Antennenelemente 5, 25 zu erreichen, kann ausgehend von einer mittleren Wellenlänge das Antennenelement 5 einen etwas größeren Umfang und das Antennenelement 25 einen etwas kleineren Umfang aufweisen, so daß sich hinsichtlich der Abstimmung ein akzeptabler Kompromiß ergibt. Andererseits kann das Antennenelement 25 auch gleich Groß wie das Antennenelement 5 ausgebildet werden, wobei dieses dann in z-Richtung (siehe Fig. 2) ober- oder unterhalb des anderen Elements anzuordnen ist. Um das Vor-/Rückwärtsverhältnis, das durch die Reflektorplatte 3 erreicht wird, aufrechtzuerhalten, ist es dabei vorteilhaft, wenn die Anordnung der beiden Antennenelemente 5, 25 etwas ober- und unterhalb der Höhe H = λ/8 erfolgt.

Der Einspeisepunkt 29 des weiteren Antennenelements 25 ist gegenüber dem Einspeisepunkt 11 des Antennenelements 5 um 90° versetzt angeordnet, so daß eine maximale Entkoppelung zwischen den beiden Antennen hinsichtlich Empfang und gleichzeitigen Sendens erreicht wird. Wenn beide Antnennenelemente 5, 25 als Sendeantenne oder als Empfangsantenne verwendet werden, läßt sich mit dieser Anordnung auch erreichen, daß eine in einem beliebigen Winkel zu der x- bzw. y-Achse stehende Antenne des Mobiltelefons zumindest gegenüber einem der Antennenelemente 5, 25 eine guten Kopplungsfaktor hat.

Die Fig. 5 zeigt ein zweites Ausführungsbeispiel, bei dem das Antennenelement 5 und ein weiteres Antennenelement 35 vorgesehen sind. Das Antennenelement 5 ist wie die Antennenelemente 5 des ersten und zweiten Ausführungsbeispiels aufgebaut. Das weitere Antennenelement 35 entspricht hinsichtlich seines prinzipiellen Aufbaus ebenfalls dem Antennenelement 5, weist also einen Außenleiter 36, einen Innenleiter 37, die Herausführung des Innenleiters 37 aus dem Ende 38 und die entsprechende Verbindung mit dem Außenleiter 36 im Bereich des Einspeisepunktes 39 sowie ein Verbindungsstück 40 auf. Die abgewickelte Länge des Antennenelements 35 entspricht allerdings nur etwa der halben abgewickelten Länge des Antennenelements 5, so daß es zur Übertragung auf der doppelten Mittenfrequenz abgestimmt ist. Mit dem Antennenelement 35 läßt sich daher die nächst höhere Mode des Übertragungssignals empfangen bzw. senden. Die Verbindungsstücke 18 und 40 der beiden Antennenelemente 5, 35 sind dabei um 180° gegeneinander gedreht. Durch die beiden Antennenelemente 5, 35 gemäß dem dritten Ausführungsbeispiel wird eine breitbandige Übertragung mittels des Antennenkopplers 1 erreicht.

Für die Verbindung der beiden Antennenelemente 5, 35 mittels der Verbindungsstücke 18, 40 mit dem Meßgerät 19 ist eine Frequenzweiche erforderlich, die zwischen die Antennenelemente 5, 35 und das Meßgerät 19 geschalten wird.

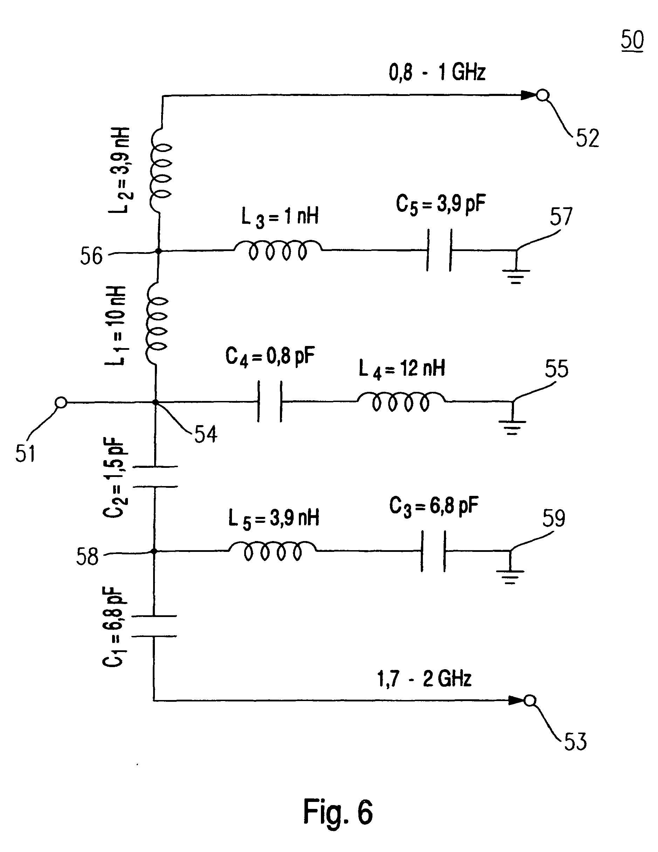

Eine solche Frequenzweiche ist in der Fig. 6 dargestellt. Um die Darstellung zu vereinfachen, sind die für die Freuqenzweiche 50 vorgesehenen Bauelemente in der Fig. 6 mit konkreten Werten bezeichnet. Dies dient allerdings nur der Erläuterung des bevorzugten Ausführungsbeispiels und stellt auch hinsichtlich der erreichten Frequenztrennung keine Einschränkung der Erfindung da. Die Frequenzweiche 50 weist einen Anschlußpunkt 51, einen Anschlußpunkt 52 für einen unteren Frequenzzweig und einen Anschlußpunkt 53 für einen oberen Frequenzzweig auf. Der Anschlußpunkt 51 ist mit einem Knoten 54 verbunden, der über einen Kondensator C4 und eine Spule L4 auf Masse 55 gelegt ist. Über die Spule L1 ist der Knoten 54 mit dem Knoten 56 verbunden. Der Knoten 56 ist über die Spule L3 und den Kondensator C5 auf Masse gelegt, um den oberen Frequenzbereich, der auf der Seite des Anschlußpunktes 53 liegt, zu sperren. Außerdem ist der Knoten 56 über die Spule L2 mit dem Anschlußpunkt 52 verbunden.

Der Knoten 54 ist mit dem Knoten 58 über den Kondensator C2 verbunden. Der Knoten 58 ist über die Spule L5 und den Kondensator C3 mit Masse 59 verbunden, um den unteren Frequenzbereich, der über den Anschlußpunkt 52 übertragen wird, zu sperren. Der Knoten 58 ist außerdem über den Kondensator C1 mit dem Anschlußpunkt 53 verbunden.

Vorzugsweise sind die Werte der Bauelemente gemäß dem dritten Ausführungsbeispiel: C1 = 6,8 pF, C2 = 1,5 pF, C3 = 6,8 pF, C4 = 0,8 pF, C5 = 3,9 pF, L1 = 10 nH, L2 = 3,9 nH, L3 = 1 nH, L4 = 12 nH und L5 = 3,9 nH. Mit diesen Werten wird eine Frequenzaufteilung von 0,8 GHz bis 1 GHz im unteren Frequenzzweig, der über den Anschlußpunkt 52 übertragen wird, und 1,7 GHz bis 2 GHz im oberen Frequenzzweig, der über den Anschlußpunkt 53 übertragen wird, erreicht.

Im Rahmen der Erfindung sind auch andere Werte für die Bauelemente und/oder eine andere Frequenzaufteilung möglich.

In den beschriebenen Ausführungsbeispielen wird der Innenleiter 9 des jeweiligen Antennenelementes zur Bildung einer offenen Antenne auf den dem Einspeisepunkt elektrisch am nächsten liegenden Abschnitt des Außenleiters geführt. Im Rahmen der Erfindung kann der Innenleiter allerdings auch unmittelbar auf den ihn umgebenden Außenleiter zurückgeführt werden. Der Innenleiter des jeweiligen Antennenelements ist dann auf den Abschnitt des Außenleiters geführt, der dem Innenleiter räumlich am nähesten liegt.

Die Erfindung ist nicht auf die beschriebenen Ausführungsbeispiele beschränkt. Insbesondere eignet sich der Antennenkoppler zum Testen von beliebigen Sendern und/oder Empfängern bzw. Sende- und/oder Empfangsgeräten, wobei eine bevorzugte Anwendung im Testen von Mobilfunktelefonen (Mobiltelefonen) liegt. In den beschriebenen Ausführungsbeispielen wird das Mobiltelefon 2 auf eine Auflagefläche 20 des Aufnahmeelements 4 des Antennenkopplers 1 aufgelegt. Die Auflagefläche 20 kann dabei auch als Gehäuseoberseite ausgebildet sein, wobei es nicht zwingend erforderlich ist, zusätzlich ein Aufnahmeelement 4 zum fixierten Halten des Mobiltelefons 2 vorzusehen, da der erreichte Kopplungsfaktor im wesentlich unabhängig von Verschiebungen in y- und x-Richtung ist. Vorteilhafter ist es allerdings dennoch, eine definierte Position des Mobiltelefons 2 durch das beschriebene Aufnahmeelement 4 vorzusehen. Das Gehäuse ist vorzugsweise nur im Bereich der Reflektorplatte leitend z. B. aus Metall und in den übrigen Bereichen zur Vermeidung von Reflexionen aus einen nicht leitenden Material ggf. in den Seitenbereichen mit einer absorbierenden Beschichtung ausgeführt.

## Patentansprüche

1. Antennenkoppler (1) zum Testen von mobilen Sendern und/oder Empfängern, insbesondere Mobiltelefonen (2), mit einem Aufnahmeelement (4) und/oder einer Auflagefläche (20) für den mobilen Sender und/oder Empfänger und zumindest einem ersten Antennenelement (5),
wobei das Antennenelement (5) als räumlich zumindest im wesentlichen geschlossene Schleife ausgebildet ist,
**dadurch gekennzeichnet,**
**dass** ein zweites Antennenelement (25, 35) vorgesehen ist, das ebenfalls als räumlich zumindest im wesentlichen geschlossene Schleife ausgebildet ist und das so ausgebildet ist, dass es zur Übertragung etwa der doppelten Frequenz des ersten Antennenelementes (5) geeignet ist, und
**dass** der Umfang der Schleife des zweiten Antennenelementes (25, 35) zumindest im wesentlichen gleich dem halben Umfang der Schleife des ersten Antennenelementes (5) ist.

2. Antennenkoppler nach Anspruch 1,
**dadurch gekennzeichnet,**
**dass** eine Frequenzweiche (50) vorgesehen ist, die zwischen einer Messanordnung (19) und die Antennenelemente (5, 35) geschaltet ist.

3. Antennenkoppler nach Anspruch 1 oder 2,
**dadurch gekennzeichnet,**
**dass** der Einspeisepunkt (29) des zweiten Antennenelementes (25) gegenüber dem Einspeisepunkt (11) des einen Antennenelementes (5) drehversetzt angeordnet ist.

4. Antennenkoppler nach Anspruch 3,
**dadurch gekennzeichnet,**
**dass** der Drehversatz zumindest im wesentlichen 90° beträgt.

5. Antennenkoppler nach einem der Ansprüche 1 bis 4,
**dadurch gekennzeichnet,**
**dass** das Antennenelement (5, 25, 35) im wesentlichen in einer Ebene (14) angeordnet ist, die parallel zu einer Reflektorplatte (3), an der das Aufnahmeelement (4) und/oder das Antennenelement (5, 25, 35) befestigt ist, orientiert ist.

6. Antennenkoppler nach Anspruch 5,
**dadurch gekennzeichnet,**
**dass** die Schleife des Antennenelementes (5, 25, 35) in einer Höhe (H) über der Reflektorplatte (3) angeordnet ist, die zumindest im wesentlichen einem Achtel der Wellenlänge der über das Antennenelement (5, 25, 35) übertragenen Strahlung entspricht.

7. Antennenkoppler nach einem der Ansprüche 1 bis 6,
**dadurch gekennzeichnet,**
**dass** das Antennenelement (5, 25, 35) einen Innenleiter (9, 27, 37) und einen den Innenleiter (9, 27, 37) umgebenden Außenleiter (10, 26, 36) umfasst, wobei der Außenleiter (10, 26, 36) den Innenleiter (9, 27, 37) abschirmt.

8. Antennenkoppler nach Anspruch 7,
**dadurch gekennzeichnet,**
**dass** der Innenleiter (9, 27, 37) des Antennenelementes (5, 25, 35) im Bereich (13) des Einspeisepunktes (11, 29, 39) auf den Außenleiter (10, 26, 36) geführt ist.

9. Antennenkoppler nach Anspruch 8,
**dadurch gekennzeichnet,**
**dass** der Innenleiter (9, 27, 37) des Antennenelementes (5, 25, 35) zur Bildung einer offenen Antenne auf den dem Einspeisepunkt (11, 29, 39) elektrisch am nächsten liegenden Abschnitt (17) des Außenleiters (10, 26, 36) geführt ist.

10. Antennenkoppler nach einem der Ansprüche 1 bis 9,
**dadurch gekennzeichnet,**
**dass** der Umfang der Schleife des Antennenelementes (5, 25, 35) zumindest im wesentlichen gleich der Wellenlänge der über das Antennenelement (5, 25, 35) abgestrahlten Strahlung ist.

11. Antennenkoppler nach einem der Ansprüche 1 bis 10,
**dadurch gekennzeichnet,**
**dass** die Schleife zumindest im wesentlichen kreisringförmig ausgebildet ist.

## Claims

1. Antenna coupler (1) for testing mobile transmitters and/or receivers, especially mobile telephones (2), with a retaining element (4) and/or a bearing surface (20) for the mobile transmitter and/or receiver and at least one first antenna element (5),
wherein the antenna element (5) is designed as a loop, which is at least substantially closed in spatial terms
**characterised in that**
a second antenna element (25, 35) is provided, which is also designed as a loop, which is at least substantially closed in spatial terms and which is designed in such a manner, that it is suitable for the transmission of approximately double the frequency of the first antenna element (5), and that the circumference of the loop of the second antenna element (25, 35) is at least substantially the same as half the circumference of the loop of the first antenna element (5).

2. Antenna coupler according to claim 1,
**characterised in that**,
a frequency-separating filter (50) is provided, which is connected between a measuring arrangement (19) and the antenna elements (5, 35).

3. Antenna coupler according to claim 1 or 2,
**characterised in that**
the feeding point (29) of the second antenna element (25) is arranged with an angular offset relative to the feeding point (11) of the first antenna element (5).

4. Antenna coupler according to claim 3,
**characterised in that**
the angular offset is at least substantially 90°.

5. Antenna coupler according to any one of claims 1 to 4,
**characterised in that**
the antenna element (5, 25, 35) is arranged substantially in one plane (14), which is orientated parallel to a reflector plate (3), to which the retaining element (4) and/or the antenna element (5, 25, 35) is attached.

6. Antenna coupler according to claim 5,
**characterised in that**
the loop of the antenna element (5, 25, 35) is arranged at a height (H) above the reflector plate (3), which corresponds at least substantially to one eighth of the wavelength of the radiation transmitted via the antenna element (5, 25, 35).

7. Antenna coupler according to any one of claims 1 to 6,
**characterised in that**
the antenna element (5, 25, 35) comprises an inner conductor (9, 27, 37) and an outer conductor (10, 26, 36) surrounding the inner conductor (9, 27, 37), wherein the outer conductor (10, 26, 36) shields the internal conductor (9, 27, 37).

8. Antenna coupler according to claim 7,
**characterised in that**
the inner conductor (9, 27, 37) of the antenna element (5, 25, 35) extends to the outer conductor (10, 26, 36) within the region (13) of the feeding point (11, 29, 39).

9. Antenna coupler according to claim 8,
**characterised in that**
the inner conductor (9, 27, 37) of the antenna element (5, 25, 35) extends to the portion (17) of the outer conductor (10, 26, 36) disposed electrically nearest to the feeding point (11, 29, 39) thereby forming an open antenna.

10. Antenna coupler according to any one of claims 1 to 9,
**characterised in that**
the circumference of the loop of the antenna element (5, 25, 35) is at least substantially the same as the wavelength of the radiation emitted via the antenna element (5, 25, 35).

11. Antenna coupler according to any one of claims 1 to 10,
**characterised in that**
the loop is designed at least substantially in a circular shape.

## Revendications

1. Coupleur d'antenne (1) pour tester des émetteurs et/ou récepteurs mobiles, en particulier des téléphones mobiles (2), avec un élément de logement (4) et/ou une surface de support (20) pour l'émetteur et/ou le récepteur mobile et au moins un premier élément d'antenne (5),
étant entendu que l'élément d'antenne (5) est configuré au moins sensiblement en boucle fermée spatialement,
**caractérisé en ce qu'**il
est prévu un second élément d'antenne (25,35) qui est également configuré au moins sensiblement en boucle fermée spatialement et qui est conçu de telle sorte à permettre la transmission sensiblement à une fréquence doublée par rapport au premier élément d'antenne (5), et
**en ce que** la circonférence de la boucle du second élément d'antenne (25,35) est au moins sensiblement égale à la demi-circonférence de la boucle du premier élément d'antenne (5).

2. Coupleur d'antenne selon la revendication 1,
**caractérisé en ce qu'**il
est prévu un circuit diviseur de fréquence (10) qui est monté entre un dispositif de mesure (19) et les éléments d'antenne (5,35).

3. Coupleur d'antenne selon la revendication 1 ou 2,
**caractérisé en ce que**
le point d'alimentation (29) du second élément d'antenne (25) est disposé de façon décalée en rotation en regard du point d'alimentation (11) de l'un des éléments d'antenne (5).

4. Coupleur d'antenne selon la revendication 3,
**caractérisé en ce que**,
le décalage en rotation est au moins sensiblement de 90°.

5. Coupleur d'antenne selon l'une des revendications 1 à 4,
**caractérisé en ce que**,
l'élément d'antenne (5,25,35) est disposé sensiblement dans un plan (14), qui est orienté parallèlement à une plaque de réflecteur (3) sur laquelle est fixée l'élément de logement (4) et/ou l'élément d'antenne (5,25,35).

6. Coupleur d'antenne selon la revendication 5,
**caractérisé en ce que**,
la boucle de l'élément d'antenne (5,25,35) est agencée à une hauteur (H) au-dessus de la plaque de réflecteur, qui correspond au moins sensiblement à un huitième de la longueur d'onde du rayonnement transmis par l'élément d'antenne (5,25,35).

7. Coupleur d'antenne selon l'une des revendications 1 à 6,
**caractérisé en ce que**,
l'élément d'antenne (5,25,35) comprend un conducteur interne (9,27,37) et un conducteur externe (10,26,36) entourant le conducteur interne (9,27,37), étant entendu que le conducteur externe (10,26,36) sert de blindage au conducteur interne (9,27,37).

8. Coupleur d'antenne selon la revendication 7,
**caractérisé en ce que**,
le conducteur interne (9,27,37) de l'élément d'antenne (5,25,35) est guidé dans la région (13) du point d'alimentation (11,29,39) sur le conducteur externe (10,26,36).

9. Coupleur d'antenne selon la revendication 9,
**caractérisé en ce que**,
le conducteur interne (9,27,37) de l'élément d'antenne (5,25,35) pour la formation d'une antenne ouverte est guidé sur le tronçon (17) du conducteur externe (10,26,36), tronçon situé électriquement au plus près du point d'alimentation (11,29,39).

10. Coupleur d'antenne selon l'une des revendications 1 à 9,
**caractérisé en ce que**,
la circonférence de la boucle de l'élément d'antenne (5,25,35) est au moins sensiblement égale à la longueur d'onde du rayonnement émis par l'élément d'antenne (5,25,35).

11. Coupleur d'antenne selon l'une des revendications 1 à 10,
**caractérisé en ce que**,
la boucle est de configuration sensiblement circulaire.
